# FASCICULE DE BREVET EUROPEEN

(11) **EP 0 936 027 B1**
(45) Date de publication et mention de la délivrance du brevet: **07.05.2003**
(21) Numéro de dépôt: 98810110.1
(22) Date de dépôt: 12.02.1998
(51) Int. Cl.: B23Q 39/04

(54) **Dispositif d'usinage en contre-opération pour une machine-outil**
Bearbeitungsvorrichtung zum stirnseitigen Bearbeiten in einer Werkzeugmaschine
Device for machining the rear end of a workpiece on a machine-tool

(43) Date de publication de la demande: 18.08.1999
(73) Titulaire: Tornos SA, 2740 Moutier (CH)
(72) Inventeur: Simonin, Jean-Claude, 2740 Moutier (FR)
(74) Mandataire: BOVARD AG - Patentanwälte

(56) Documents cités:
- EP-A- 0 298 672
- BG-A- 23 276
- DE-B- 2 401 656
- FR-A- 2 303 626

## Description

La présente opération concerne l'usinage en contre-opération sur une machine-outil et notamment un dispositif tel que décrit dans le préambule de la revendication 1.

On entend par contre-opération toute opération d'usinage faite sur une portion arrière d'une pièce à usiner, après que la portion avant de ladite pièce ait été usinée de manière conventionnelle. Une contre-opération peut concerner aussi bien un usinage extérieur qu'un usinage intérieur de ladite portion arrière. Pour effectuer une contre-opération, il est nécessaire de retirer la pièce, maintenue par sa portion arrière dans la pince de la broche porte-pièce, pour la fixer dans une autre pince de broche porte-pièce par sa portion avant.

Dans le cas où la machine-outil est multibroches, par exemple un tour automatique ou une décolleteuse, diverses solutions ont été proposées à cet effet

La solution conventionnelle consiste à reprendre l'usinage de la portion arrière de la pièce sur une autre machine ou ultérieurement sur la même machine. Cette solution nécessite une importante manutention des pièces à usiner ainsi que deux machines ou alors augmente fortement le temps de production si une seule machine est utilisée pour les deux types d'opérations.

Selon une autre possibilité, lorsque la pièce, fixée par sa portion arrière arrive en position d'extraction dans le cas d'un tour automatique ou en position de coupe dans le cas d'une décolleteuse, une contre-broche est avancée en face de la portion avant de la pièce, celle-ci est saisie par la pince de la contre broche, puis est relâchée par la pince de la broche principale dans le cas d'un tour automatique ou alors est coupée dans le cas d'une décolleteuse. Ensuite la contre-broche est reculée, un outil de contre-opération est mis en place, la contre-broche est avancée en position de travail puis l'usinage de contre-opération est effectué. Après ceci, la contre-broche est reculée, l'outil est dégagé, la pince de la contre-broche est desserrée et la pièce en est extraite. On comprend facilement que cette suite d'opérations prend un certain temps, souvent plus long que le temps d'opération le plus long sur la portion avant de la pièce, notamment quand l'usinage de la portion arrière en contre-opération comprend plusieurs opérations d'usinage, nécessitant l'approche et le retrait de plusieurs outils. Ceci a pour conséquence que le temps de contre-opération correspond alors au temps de cycle.

En variante, il est possible d'avoir plus d'une contre-broche, par exemple deux ou trois afin de diminuer les inconvénients mentionnés. Par contre cette solution nécessite l'utilisation de deux ou trois postes d'usinage sur le barillet, limitant d'autant les postes d'usinages disponibles pour la portion avant sur ce barillet.

Une autre solution consiste à retourner la pièce dans la pince de la broche porte-pièce. Cette solution comprend aussi des inconvénients, à savoir qu'éventuellement plusieurs postes d'usinage sont à prévoir pour les opérations d'usinage sur la portion arrière de la pièce, diminuant d'autant les postes d'usinage disponibles pour les opérations d'usinage sur la portion avant. D'autre part un poste spécial doit être prévu pour le retournement de la pièce, ce poste étant difficile à réaliser dans le cas de pièces courtes. Souvent il est indispensable d'arrêter la broche en rotation pour le retournement, ce qui est pénalisant sur le temps d'opération.

Une autre solution consiste à saisir la pièce lorsqu'elle est en position d'extraction ou de coupe, puis de la transporter par un moyen de transport automatique vers un appareil auxiliaire sur lequel les usinages en contre-opérations sont effectués. Cette solution comporte aussi de nombreux inconvénients, à savoir l'encombrement de la zone de travail par le moyen de transport de pièce, le fait que la prise de pièce par le moyen de transport peut difficilement être tournante et ne peut être synchronisée avec la vitesse des broches, ainsi que la difficulté de charger des pièces courtes.

Encore une autre solution consiste à construire une machine-outil symétrique, c'est-à-dire comportant deux barillets alignés sur le même axe, soit montés sur la même glissière, un premier barillet portant les broches porte-pièces pour l'usinage des portions avant alors que le deuxième barillet porte les broches porte-pièces pour l'usinage des portions arrières, les deux barillets portant le même nombre de broches et étant indexés simultanément sur l'axe commun. Bien que cette solution s'affranchisse de nombreux inconvénients des dispositifs décrits, elle comporte aussi des inconvénients, la machine est extrêmement complexe et la course des broches du deuxième barillet étant limitée, la place disponible pour l'usinage entre les deux barillets est limitée ce qui rend impossible le montage d'outils d'usinage tournants.

Un premier but de l'invention est de proposer un dispositif d'usinage en contre-opération d'une pièce ne rencontrant pas les inconvénients des dispositifs connus.

Un autre but de l'invention est de proposer une machine-outil multibroches équipée du dispositif précédent.

Le premier de ces buts est obtenu par un dispositif d'usinage tel que décrit dans la partie caractérisante de la revendication 1, des formes d'exécution particulières et des variantes étant décrites dans les revendications dépendantes.

Le deuxième de ces buts est obtenu par une machine-outil conforme à l'une des revendications 12 à 15.

La figure 1 montre une vue schématique par le côté de la zone de travail d'une machine-outil équipée d'un dispositif selon l'invention, et

la figure 2 monte une coupe selon la ligne II-II de la machine-outil de la figure 1.

La description qui suit ainsi que les figures concernent une décolleteuse, mais il est bien entendu qu'il pourrait tout aussi bien s'agir d'un tour automatique ou d'une machine transfert, l'homme du métier étant apte à faire les adaptations nécessaires.

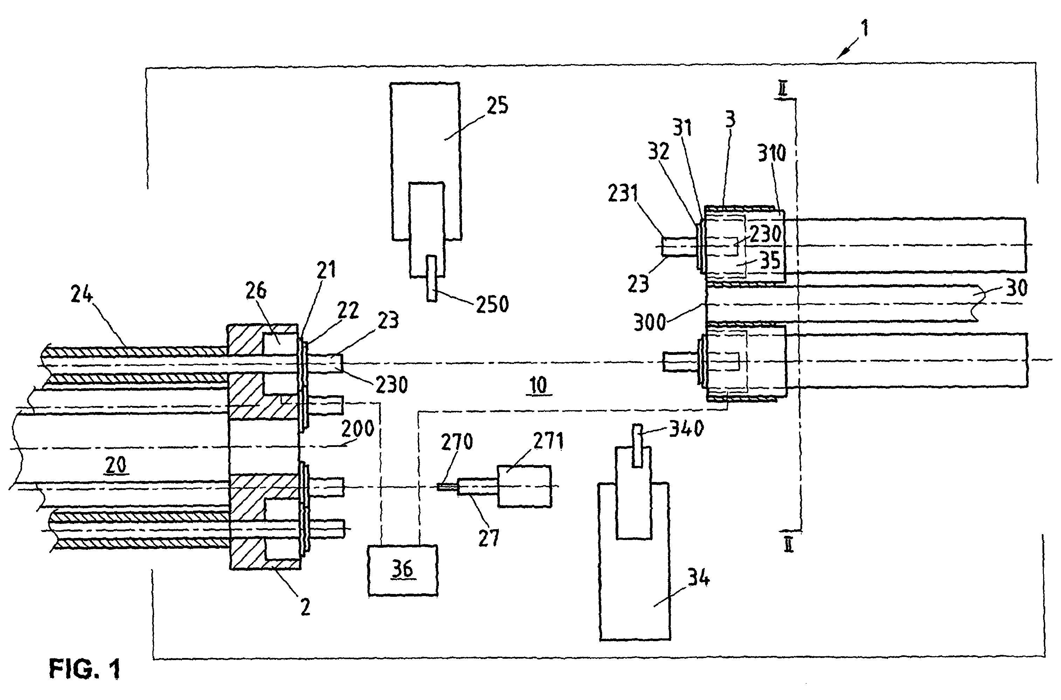

Sur la figure 1 on voit une portion de la machine-outil 1, notamment sa zone d'usinage 10. De manière conventionnelle, la machine-outil 1 est munie d'un barillet principal 2, indexé en rotation autour d'une glissière principale 20 sur un premier axe 200 et portant une pluralité de broches 21 munies chacune d'une pince 22 serrant une pièce 23 pour l'usinage de sa portion avant 230. Dans l'exemple représenté, la machine-outil 1 est une décolleteuse et comprend donc un ravitailleur 24 disposé en arrière du barillet 2. La portion avant 230 consiste donc en l'extrémité d'une barre fournie par le ravitailleur 24, ladite barre étant serrée dans la pince 22 en arrière de la portion avant 230. Plusieurs blocs d'usinage 25, un seul étant représenté sur la figure, portant chacun au moins un outil d'usinage 250, sont prévus pour l'usinage radial de la portion avant 230 aux postes d'usinage correspondant aux diverses broches 21. Les blocs d'usinage 25 peuvent être montés sur des coulisses croisées. De même des blocs d'usinage 27, portant chacun un outil d'usinage 270 déplaçable axialement par l'effet de l'actuateur 271, peuvent être prévus pour un usinage axial de la portion avant 230, aux mêmes postes d'usinage que précédemment. Les outils d'usinage 250 et/ou 270 peuvent être fixes ou tournants et peuvent être prévus pour un usinage intérieur ou extérieur de la portion avant 230 de la pièce 23. Chacune des broches 21 peut être munie de moyens de mise en rotation de technique connue, schématisés en 26. La machine-outil telle que décrite jusqu'ici est conventionnelle et permet l'usinage multipostes des portions avant 230 des pièces d'usinage 23.

Le dispositif d'usinage en contre-opération selon l'invention est constitué d'un barillet de reprise 3, monté sur une glissière de reprise 30, sur un axe 300, parallèle au premier axe 200 de la glissière principale 20. Le barillet de reprise 3 est indexé en rotation autour de la glissière de reprise 30 et porte lui aussi une pluralité de broches de reprise 31 munies chacune d'une pince 32 pour la saisie d'une pièce 23 par son extrémité avant 230. Chaque broche 31 comprend un actuateur 310 permettant un déplacement de la broche selon une direction parallèle à l'axe 300 pour une raison qui sera expliquée plus bas. Le dispositif comprend encore une pluralité de blocs d'usinage 34, portant chacun au moins un outil d'usinage 340, chaque bloc d'usinage coopérant avec un poste d'usinage correspondant à une broche 31 du barillet de contre-opération 3 pour l'usinage de la portion arrière 231 de la pièce 23. Comme précédemment, les outils d'usinage 340 peuvent être fixes ou tournants et peuvent être prévus pour un usinage intérieur ou extérieur de la portion arrière 231 de la pièce 23. Chacune des broches de reprise 31 peut être munie de moyens de mise en rotation de technique connue, schématisés en 35.

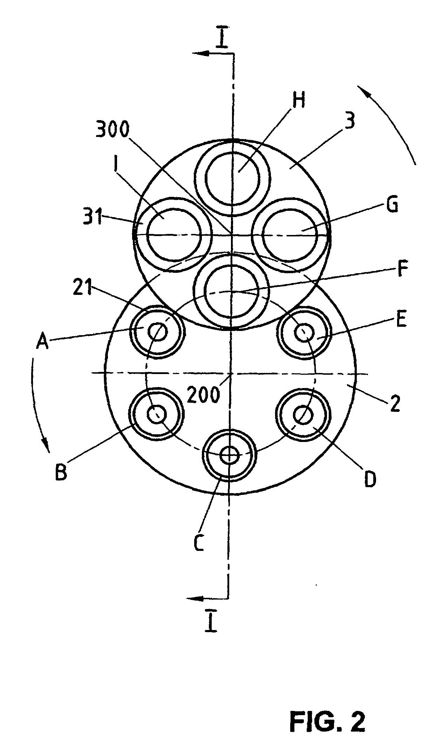

En se reportant à la figure 2, on peut observer la position relative particulière prévue entre les axes 200 et 300 des glissières 20 et 30, soit entre les barillets 2 et 3. Les deux axes 200 et 300, respectivement les barillets 2 et 3 sont disposés sur la machine-outil 1 de telle manière que pour un poste de travail d'une broche 21 du barillet 2 et un poste de travail d'une broche 31 du barillet 3, on ait un alignement desdites broches 21 et 31 sur ledit poste de travail qui est commun aux deux barillets 2 et 3.

Dans l'exemple représenté à la figure 2, le barillet principal 2 comprend six broches 21, définissant ainsi les postes A à F alors que le barillet de reprise 3 comprend quatre broches 31, définissant les postes F à I, vu que le poste F est commun aux deux barillets 2 et 3.

On peut décrire maintenant le fonctionnement du dispositif d'usinage en contre-opération tel que décrit et monté sur une machine-outil. Le poste A sur le barillet principal 2 est généralement un poste de charge de la pièce 23 sur la broche 21 qui lui fait face. Après avoir été chargée au poste A, la portion avant 230 de la pièce 23 est usinée en plusieurs opérations par le passage de la broche 21 en face de chacun des postes B, C, D et E, comportant chacun un bloc d'usinage 25. Lorsque la pièce 23 arrive au poste F, l'actuateur 310 de la broche de reprise 31 du barillet de reprise 3 disposée en face du poste F, actionne ladite broche en translation afin de l'amener en position pour saisir la portion avant 230 de la pièce 23 toujours maintenue dans la broche 21 en position F. Dès que la pièce 23 est tenue dans la pince 32 de la broche de reprise 31, elle est relâchée par la pince 22 de la broche 21 dans le cas d'un tour automatique ou alors est coupée dans le cas d'une décolleteuse, puis la broche est rétractée par l'actuateur 310 pour la ramener dans la zone de travail correspondant au barillet de reprise 3. Ensuite de quoi, le barillet de reprise 3 est indexé pour amener la broche de reprise vers le prochain poste G où un premier usinage de la portion arrière 231 est effectué par un bloc d'usinage 34 puis vers les autres postes H et I où au moins un autre usinage de ladite portion arrière par un autre bloc d'usinage 34 peut être effectué sur chacun desdits postes. De retour au poste F, la pièce 23 complètement usinée sur sa portion avant 230 et sa portion arrière 231 est extraite de manière conventionnelle avant qu'une nouvelle portion avant 230 soit saisie comme indiqué plus haut.

La machine-outil a été décrite avec un barillet principal 2 comportant six broches 21, mais il est bien entendu que ledit barillet peut comprendre n'importe quel nombre usuel de broches et de postes d'usinage correspondant. De même le barillet de reprise 3 du dispositif d'usinage en contre-opération peut aussi comprendre un nombre de broches 31 différent de quatre, dépendant du nombre d'opérations d'usinage à effectuer sur la portion arrière 231 de la pièce 23. Comme indiqué précédemment, les broches 21 et 31 peuvent être des broches tournantes, pour la réalisation d'opérations d'usinage nécessitant de telles broches tournantes. Dans ce cas, l'opération de saisie de l'extrémité avant 230 par la broche de reprise 21 peut se faire alors que les deux broches 21 et 31 qui sont alignées sur la poste F, sont en rotation. A cet effet, le dispositif d'usinage comprend avantageusement des moyens de synchronisation des vitesses de rotation des deux dites broches alignées au poste F, ces moyens de synchronisation étant schématisés en 36 et pouvant être de n'importe quel type connu.

Par un tel dispositif d'usinage en contre-opération on constate que les opérations d'usinage en contre-opération sur les postes G H et I sont indépendantes de celles effectuées sur les postes A à E. Ainsi, le temps de pièce est uniquement fonction de la durée d'opération la plus longue sur un poste d'usinage quelconque, que ce soit un usinage sur la portion avant 230 ou un usinage sur la portion arrière 231 de la pièce 23, et ne dépend plus d'un transfert ou d'un renversement de la pièce, ni ne correspond plus au temps total des opérations en contre-opération comme sur les dispositifs de l'art antérieur.

La présence d'une deuxième glissière à côté de la glissière principale diminue fortement l'espace nécessaire pour un tel dispositif, un dispositif d'usinage en contre-opération tel que décrit peut donc être installé sur une machine-outil, tour automatique, décolleteuse ou machine transfert, existante de même qu'il peut être directement prévu sur une nouvelle machine.

Le dispositif d'usinage en contre-opération a été décrit ici uniquement dans son principe, l'homme du métier étant apte à adapter ce principe à une machine-outil déterminée.

## Revendications

1. Dispositif d'usinage en contre-opération pour une machine-outil (1), ladite machine-outil comprenant notamment une glissière principale (20) sur laquelle un barillet principal (2), apte à être indexé en rotation autour de ladite glissière principale (20), porte une pluralité de broches (21) munies chacune d'une pince porte-pièce (22), ainsi que des postes de travail (A, B, C, D, E, F), chacun pouvant comporter un bloc d'usinage (25,27) muni d'au moins un outil d'usinage (250,270), et correspondant à chacune des positions indexées dudit barillet principal (2),
**caractérisé en ce que**
ledit dispositif d'usinage en contre-opération comprend une glissière de reprise (30) disposée parallèlement à ladite glissière principale (20), ainsi qu'un barillet de reprise (3), apte à être indexé en rotation autour de ladite glissière de reprise (30), portant une autre pluralité de broches de reprise (31) munies chacune d'une pince porte-pièce (32), ainsi que des postes de travail (F, G, H, I), chacun pouvant comporter un bloc d'usinage (34) muni d'au moins un outil d'usinage (340), correspondant à chacune des positions indexées dudit barillet de reprise (3), les broches de reprise (31) du barillet de reprise (3) étant tournées vers les broches principales (21) du barillet principal (2), une broche de reprise (31) étant alignée sur un même axe qu'une broche principale (21) pour une position d'indexation selon un même poste de travail (F) du barillet de reprise (3) et du barillet principal (2).

2. Dispositif d'usinage selon la revendication 1, **caractérisé en ce que** les broches de reprise (31) sont chacune munies d'un actuateur (310) apte à déplacer longitudinalement ladite broche lorsque celle-ci se trouve dans la position de travail (F) commune aux deux barillets (2,3).

3. Dispositif d'usinage selon la revendication 2, **caractérisé en ce que** la broche de reprise (31) en position avancée sous l'effet dudit actuateur (310) est munie d'une pince porte-pièce (32) apte à saisir une portion d'extrémité (230) d'une pièce (23) maintenue dans une pince porte-pièce (22) d'une broche (21) du barillet principal (2).

4. Dispositif d'usinage selon la revendication 3, **caractérisé en ce que** les broches (21) du barillet principal (2) ainsi que les broches (31) du barillet de reprise sont munies de moyens de mise en rotation (26, 35) desdites broches, le dispositif comprenant en outre des moyens (36) de synchronisation des vitesses de rotation desdites broches, la saisie de ladite portion d'extrémité (230) par la pince porte-pièce (32) de la broche de reprise (31) se faisant lorsque les deux broches (21, 31) sont en rotation synchronisée.

5. Dispositif d'usinage selon l'une des revendications 3 ou 4, la machine-outil (1) étant une décolleteuse, **caractérisé en ce que** la position de travail (F) commune aux deux barillets (2,3) comprend un poste d'usinage (25) muni d'un outil de coupe (250) apte à couper l'extrémité arrière de la portion avant (230) de la pièce saisie par la pince porte-pièce (32) de la broche de reprise (31).

6. Dispositif d'usinage selon l'une des revendications 3 ou 4, la machine-outil (1) étant un tour automatique, **caractérisé en ce que** la position de travail (F) commune aux deux barillets (2,3) consiste en une position de relâchement de la pièce (23) par la pince porte-pièce (22) de la broche principale (21) après que la portion avant (230) de ladite pièce ait été saisie par la pince porte-pièce (32) de la broche de reprise (31).

7. Dispositif d'usinage selon l'une des revendications précédentes, **caractérisé en ce qu'**au moins un des postes de travail (A, B, C, D, E) comprend un bloc d'usinage (25,27) muni d'au moins un outil d'usinage (250,270) apte à usiner une portion avant (230) de la pièce à usiner (23).

8. Dispositif d'usinage selon l'une des revendications précédentes, **caractérisé en ce qu'**au moins un des postes de travail (G, H, I) comprend au moins un bloc d'usinage (34) muni d'au moins un outil d'usinage (340) apte à usiner une portion arrière (231) de la pièce à usiner (23).

9. Dispositif d'usinage selon l'une des revendications 6 ou 7, **caractérisé en ce qu'**au moins l'un des usinages de la portion avant (230) ou de la portion arrière (231) de la pièce à usiner (23) est un usinage extérieur de ladite portion.

10. Dispositif d'usinage selon l'une des revendications 6 à 8, **caractérisé en ce qu'**au moins l'un des usinages de la portion avant (230) ou de la portion arrière (231) de la pièce à usiner (23) est un usinage intérieur de ladite portion.

11. Dispositif d'usinage selon l'une des revendications 9 OU 10, **caractérisé en ce qu'**au moins l'un des usinages de la portion avant (230) ou de la portion arrière (231) de la pièce à usiner (23) est effectué par un outil (250, 270, 340) tournant.

12. Machine-outil (1) équipée d'un dispositif d'usinage selon l'une des revendications précédentes.

13. Décolleteuse (1) équipée d'un dispositif d'usinage selon l'une des revendications 1 à 11.

14. Tour automatique (1) équipé d'un dispositif d'usinage selon l'une des revendications 1 à 11.

15. Machine transfert (1) équipée d'un dispositif d'usinage selon l'une des revendications 1 à 11.

## Patentansprüche

1. Vorrichtung zur Gegenoperations-Bearbeitung für eine Werkzeugmaschine (1), wobei die genannte Werkzeugmaschine insbesondere eine Hauptgleitführung (20) enthält, auf welcher ein Hauptrevolver (2), der fähig ist, um die genannte Hauptgleitführung (20) rotierend indexiert zu werden, eine Mehrzahl von Spindeln (21) trägt, von denen jede mit einer Werkstückspannzange (22) sowie mit Arbeitsstationen (A, B, C, D, E, F) ausgerüstet ist, von denen jede einen Bearbeitungsblock (25, 27) enthalten kann, der mit mindestens einem Bearbeitungswerkzeug (250, 270) ausgerüstet ist und jeder der indexierten Positionen des genannten Hauptrevolvers (2) entspricht,
**dadurch gekennzeichnet,**
**dass** die genannte Vorrichtung zur Gegenoperations-Bearbeitung eine Wiederaufnahmegleitführung (30) enthält, die parallel zur genannten Hauptgleitführung (20) angeordnet ist, sowie einen Wiederaufnahmerevolver (3), der fähig ist, um die genannte Wiederaufnahmegleitführung (30) rotierend indexiert zu werden, eine Mehrzahl von Wiederaufnahmespindeln (31) trägt, von denen jede mit einer Werkstückspannzange (32) sowie Arbeitsstationen (F, G, H, I) ausgerüstet ist, von denen jede einen Bearbeitungsblock (34) enthalten kann, der mit mindestens einem Bearbeitungswerkzeug (340) ausgerüstet ist und jeder der indexierten Positionen des genannten Wiederaufnahmerevolvers (3) entspricht, dass die Wiederaufnahmespindeln (31) des Wiederaufnahmerevolvers (3) den Hauptspindeln (21) des Hauptrevolvers (2) zugewandt sind, dass eine Wiederaufnahmespindel (31) auf eine gleiche Achse ausgerichtet ist wie eine Hauptspindel (21) für eine Indexierposition gemäss einer gleichen Arbeitsstation (F) des Wiederaufnahmerevolvers (3) und des Hauptrevolvers (2).

2. Bearbeitungsvorrichtung nach Anspruch 1, **dadurch gekennzeichnet, dass** jede der Wiederaufnahmespindeln (31) mit einem Antrieb (310) ausgerüstet ist, der fähig ist, die genannte Spindel längs zu verschieben, während diese sich in der Arbeitsposition (F) befindet, welche die zwei Revolver (2, 3) gemeinsam haben.

3. Bearbeitungsvorrichtung nach Anspruch 2, **dadurch gekennzeichnet, dass** die unter der Wirkung des genannten Antriebs (310) in die vorgeschobene Position verschobene Wiederaufnahmespindel (31) mit einer Werkstückspannzange (32) ausgerüstet ist, die fähig ist, ein Endteil (230) eines in einer Werkstückspannzange (22) einer Spindel (21) des Hauptrevolvers (2) gehaltenen Werkstücks (23) zu ergreifen.

4. Bearbeitungsvorrichtung nach Anspruch 3, **dadurch gekennzeichnet, dass** die Spindeln (21) des Hauptrevolvers (2) sowie die Spindeln (31) des Wiederaufnahmerevolvers mit Mitteln (26, 35) ausgerüstet sind, um die genannten Spindeln in Rotation zu versetzen, wobei die Vorrichtung ferner Mittel (36) zur Synchronisation der Drehgeschwindigkeiten der genannten Spindeln enthält und wobei das Ergreifen des genannten Endteils (230) durch die Werkstückspannzange (32) der Wiederaufnahmespindel (31) geschieht, während die zwei Spindeln (21, 31) in synchronisierter Rotation sind.

5. Bearbeitungsvorrichtung nach einem der Ansprüche 3 oder 4, wobei die Werkzeugmaschine (1) ein Drehautomat ist, **dadurch gekennzeichnet, dass** die den zwei Revolvern (2, 3) gemeinsame Arbeitsposition (F) eine Bearbeitungsstation (25) enthält, die mit einem Schneidwerkzeug (250) ausgerüstet ist, das fähig ist, das hintere Ende des Vorderteil (230) des durch die Werkstückspannzange (32) der Wiederaufnahmespindel (31) aufgenommenen Werkstücks zu schneiden.

6. Bearbeitungsvorrichtung nach einem der Ansprüche 3 oder 4, wobei die Werkzeugmaschine (1) eine automatische Drehbank ist, **dadurch gekennzeichnet, dass** die den zwei Revolvern (2, 3) gemeinsame Arbeitsposition (F) in einer Freigabeposition des Werkstücks (23) durch die Werkstückspannzange (22) der Hauptspindel (21) besteht, nachdem der Vorderteil (230) des genannten Werkstücks durch die Werkstückspannzange (32) der Wiederaufnahmespindel (31) ergriffen wurde.

7. Bearbeitungsvorrichtung nach einem der vorangehenden Ansprüche, **dadurch gekennzeichnet, dass** mindestens eine der Arbeitsstationen (A, B, C, D, E) einen Bearbeitungsblock (25, 27) enthält, der mit mindestens einem Bearbeitungswerkzeug (250, 270) ausgerüstet ist, das fähig ist, einen Vorderteil (230) des zu bearbeitenden Werkstücks (23) zu bearbeiten.

8. Bearbeitungsvorrichtung nach einem der vorangehenden Ansprüche, **dadurch gekennzeichnet, dass** mindestens eine der Arbeitsstationen (G, H, I) mindestens einen Bearbeitungsblock (34) enthält, der mit mindestens einem Bearbeitungswerkzeug (340) ausgerüstet ist, das fähig ist, ein Hinterteil (231) des zu bearbeitenden Werkstücks (23) zu bearbeiten.

9. Bearbeitungsvorrichtung nach einem der Ansprüche 6 oder 7, **dadurch gekennzeichnet, dass** mindestens eine der Bearbeitungen des Vorderteils (230) oder des Hinterteils (231) des zu bearbeitenden Werkstücks (23) eine Aussenbearbeitung des genannten Teils ist.

10. Bearbeitungsvorrichtung nach einem der Ansprüche 6 bis 8, **dadurch gekennzeichnet, dass** mindestens eine der Bearbeitungen des Vorderteils (230) oder des Hinterteils (231) des zu bearbeitenden Werkstücks (23) eine Innenbearbeitung des genannten Teils ist.

11. Bearbeitungsvorrichtung nach einem der Ansprüche 9 oder 10, **dadurch gekennzeichnet, dass** mindestens eine der Bearbeitungen des Vorderteils (230) oder des Hinterteils (231) des zu bearbeitenden Werkstücks (23) durch ein drehendes Werkzeug (250, 270, 340) ausgeführt wird.

12. Werkzeugmaschine (1) ausgerüstet mit einer Bearbeitungsvorrichtung nach einem der vorangehenden Ansprüche.

13. Drehautomat (1) ausgerüstet mit einer Bearbeitungsvorrichtung nach einem der Ansprüche 1 bis 11.

14. Automatische Drehbank (1) ausgerüstet mit einer Bearbeitungsvorrichtung nach einem der Ansprüche 1 bis 11.

15. Transfermaschine (1) ausgerüstet mit einer Bearbeitungsvorrichtung nach einem der Ansprüche 1 bis 11.

## Claims

1. Counter-operation machining device for a machine tool (1) comprising in particular a main slide (20) on which a main drum (2), capable of being rotatingly indexed about said main slide (20), carries a plurality of spindles (21), each provided with a workpiece holding chuck (22), as well as work stations (A, B, C, D, E, F), each able to comprise a machining unit (25, 27) provided with at least one machining tool (250, 270), and corresponding to each of the indexed positions of said main drum (2),
**characterised in that**
said counter-operation machining device comprises a secondary slide (30) disposed parallel to said main slide (20), as well as a secondary drum (3) capable of being rotatingly indexed about said secondary slide (30),carrying another plurality of secondary spindles (31) each provided with a workpiece holder (32), as well as working stations (F, G, H, I), each able to comprise a machining unit (34) provided with at least one machining tool (340), corresponding to each of the indexed positions of said secondary drum (3), the secondary spindles (31) of the secondary drum (3) being turned toward the main spindles (21) of the main drum (2), a secondary spindle (31) being aligned on the same axis as a main spindle (21) for an indexing position according to a same working station (F) of the secondary drum (3) and of the main drum (2).

2. Machining device according to claim 1, **characterised in that** the secondary spindles (31) are each provided with an actuator (310) capable of moving said spindle longitudinally when said spindle is in the working position (F) common to the two drums (2, 3).

3. Machining device according to claim 2, **characterised in that** the secondary spindle (31) in advanced position under the effect of said actuator (310) is provided with a workpiece holder (32) capable of gripping an end portion (230) of a workpiece (23) held in a workpiece holder (22) of a spindle (21) of the main drum (2).

4. Machining device according to claim 3, **characterised in that** the spindles (21) of the main drum (2) as well as the spindles (31 of the secondary drum are equipped with means for rotating (26, 35) said spindles, the device further comprising means (36) for synchronizing the speeds of rotation of said spindles, the gripping of said end portion (230) by the workpiece holder (32) of the secondary spindle (31) taking place when the two spindles (21, 31) are in synchronized rotation.

5. Machining device according to one of the claims 3 or 4, the machine tool (1) being a profiling lathe, **characterised in that** the working position (F) common to the two drums (2, 3) comprises a machining station (25) equipped with a cutting tool (250) suitable for cutting the rearward end of the front portion (230) of the workpiece gripped by the workpiece holder (32) of the secondary spindle (31).

6. Machining device according to one of the claims 3 or 4, the machine tool (1) being an automatic lathe, **characterised in that** the working position (F) common to the two drums (2, 3) is a position of release of the workpiece (23) by the workpiece holder (22) of the main spindle (21) after the front portion (230) of said workpiece has been gripped by the workpiece holder (32) of the secondary spindle (31).

7. Machining device according to one of the preceding claims, **characterised in that** at least one of the working stations (A, B, C, D, E) comprises a machining unit (25, 27) equipped with at least one machining tool (250, 270) capable of machining a front portion (230) of the workpiece to be machined (23).

8. Machining device according to one of the preceding claims, **characterised in that** at least one of the working stations (A, B, C, D, E) comprises at least one machining unit (34) equipped with at least one machining tool (340) capable of machining a rear portion (231) of the workpiece to be machined (23).

9. Machining device according to one of the claims 6 or 7, **characterised in that** at least one of the machining operations on the front portion (230) or on the rear portion (231) of the workpiece to be machined (23) is an external machining operation on said portion.

10. Machining device according to one of the claims 6 to 8, **characterised in that** at least one of the machining operations on the front portion (230) or on the rear portion (231) of the workpiece to be machined (23) is an internal machining operation on said portion.

11. Machining device according to one of the claims 9 or 10, **characterised in that** at least one of the machining operations on the front portion (230) or on the rear portion (231 ) of the workpiece to be machined (23) is carried out by a rotary tool (250, 270, 340).

12. Machine tool (1) equipped with a machining device according to one of the preceding claims.

13. Profiling lathe (1) equipped with a machining device according to one of the claims 1 to 11.

14. Automatic lathe (1) equipped with a machining device according to one of the claims 1 to 11.

15. Transfer machine (1) equipped with a machining device according to one of the claims 1 to 11.
